# EUROPÄISCHE PATENTSCHRIFT

(11) **EP 0 297 421 B1**
(45) Veröffentlichungstag und Bekanntmachung des Hinweises auf die Patenterteilung: **09.06.1993**
(21) Anmeldenummer: 88109965.9
(22) Anmeldetag: 23.06.1988
(51) Int. Cl.: H02J 7/00, H01M 10/44

(54) **Überbrückungselement zur Sicherung von Batteriezellen**
By-pass element for protection of battery cells
Elément de shuntage pour la protection de cellules de batterie

(30) Priorität: 01.07.1987 DE 3721754
(43) Veröffentlichungstag der Anmeldung: 04.01.1989
(73) Patentinhaber: Asea Brown Boveri Aktiengesellschaft, 68309 Mannheim (DE)
(72) Erfinder: Meinhold, Henner, Dr., D-7250 Leonberg (DE); Ziegenbein, Botho, Dr., D-7410 Reutlingen (DE); Petri, Günther, D-6902 Sandhausen (DE)
(74) Vertreter: Rupprecht, Klaus, Dipl.-Ing.

(56) Entgegenhaltungen:
- EP-A- 0 226 360
- DE-A- 1 513 496
- DE-A- 1 810 840
- DE-A- 2 819 584
- DE-A- 3 542 838
- US-A- 3 213 345
- US-A- 3 980 940

## Beschreibung

Die Erfindung bezieht sich auf ein Überbrückungselement zur Sicherung von Batteriezellen gemäß dem Oberbegriff des Anspruches 1 und findet vorzugsweise Anwendung bei aus wiederaufladbaren elektrochemischen Speicherzellen aufgebauten Hochtemperatur-Speicherbatterien.

Ein solches Überbrückungselement zur Sicherung von Batteriezellen ist aus der DE-PS 28 19 584 bekannt. Dort werden die Vor- und Nachteile von wiederaufladbaren elektrochemischen Batteriezellen mit Festelektrolyten erläutert. Der z.B. bei Natrium/Schwefel-Speicherzellen verwendete Elektrolyt aus β -Aluminiumoxid hat im Gegensatz zum Blei-Akkumulator den Vorteil, daß praktisch keine Selbstentladung stattfindet und beim Laden keine Nebenreaktionen ablaufen, wie etwa eine Wasserzersetzung beim Blei/Bleioxidsystem. Diesen Vorteilen steht der betriebliche Nachteil gegenüber, daß solche Zellen weder überladen noch entladen werden können, wie dies im Blei-Akkumulator möglich ist.

Aus diesem Grund wird ohne den Einsatz von überbrückenden Hilfsmitteln in einer Serienschaltung die Gesamtkapazität durch die Zelle mit der geringsten Kapazität bestimmt. Besonders schwerwiegend ist, daß Speicherzellen, die z.B. mit einem anderen Ladezustand eingesetzt werden, nie mit dem übrigen Strang synchronisiert werden können. Beim Blei-Akkumulator ist es möglich, durch Überladung - mit Wasserstoff/Sauerstoff-Entwicklung (Ausgleichsladung) - alle Zellen in den gleichen Zustand zu versetzen.

Um dieser unterschiedlichen Aufladung der Speicherzellen einer Batterie entgegenzuwirken, können zunächst mehrere Speicherzellen parallelgeschaltet werden, bevor mehrere solcher Gruppen aus parallelgeschalteten Zellen in Serie gelegt werden. Dadurch wird erreicht, daß sich innerhalb einer Gruppe, die aus mehreren parallelgeschalteten Zellen besteht, aufgrund von Ausgleichsströmen der gleiche Ladezustand aller Zellen einstellt.

Eine grundlegende Verbesserung des Aufladezustandes einer Batterie läßt sich allerdings so ohne den Einsatz von überbrückenden Hilfsmitteln ebenfalls nicht erreichen, da weiterhin der Parallelblock mit der kleinsten Kapazität die Gesamtkapazität der Batterie bestimmt und die Ladezustände verschiedener Blöcke nicht ausgeglichen werden können. In der DE-PS 28 19 584 wird deshalb eine die Batteriezelle (n) überbrückende Schaltung zur Sicherung von Speicherzellen vorgeschlagen, die eine vollständige Aufladung einer jeden Speicherzelle bis zu ihrer maximalen Kapazität ermöglicht und damit zur Symmetrierung des Ladungszustandes von Batterien dient. Dabei wird eine Zenerdiode eingesetzt, deren Nennspannung gleich der maximalen Ladespannung der Batteriezelle ist.

Aus der DE-OS 35 42 838 ist ein Überbrückungselement zum irreversiblen Kurzschließen von hochohmig ausfallenden (zerstörten) Batteriezellen in einer Batterieverschaltung mit mehreren parallelen und seriellen Einzelzellen oder Zellgruppen bekannt. Dabei wird eine Halbleiterdiode als spannungssensitives Element für die Spannungsumkehr an der defekten Batteriezelle eingesetzt. Eine Batteriezelle wird insbesondere bei Bruch ihres Festelektrolyten hochohmig.

Aus der DE-A-15 13 496 ist eine Schutzvorrichtung zum Schutz eines einen Teil einer aus mehreren Akkumulatoren bestehenden Batterie bildenden Akkumulators durch einen nichtlinearen Leiter gegen einen über den Akkumulator fließenden Störstrom bekannt. Ein einziger nichtlinearer Leiter, der mit den Klemmen des Akkumulators verbunden ist, stellt den Schutz gegen das Durchfließen eines Umkehrstromes oder eines in seiner Intensität einen bestimmten Schwellenwert überschreitenden direkten Stroms sicher, indem der nichtlineare Leiter für schwache negative Spannungen einen bedeutenden Strom, für einen bestimmten Schwellenwert übersteigende positive Spannungen ebenfalls einen bedeutenden Strom und für zwischen Null und dem genannten Schwellenwert liegende Spannungen nur einen vernachlässigbaren Strom durchläßt. Der nichtlineare Leiter kann durch eine "Eintunnel"-Diode oder durch mehrere in Reihe geschaltete "Eintunnel"-Dioden gebildet sein. Die in Reihe geschalteten "Eintunnel"-Dioden können aus verschiedenen Halbleitern bestehen, die im direkten Stromdurchsatz eine Schwellenspannung von vorbestimmtem Wert festlegen.

Der Erfindung liegt die Aufgabe zugrunde, ein Überbrückungselement zur Sicherung von Batteriezellen der eingangs genannten Art anzugeben, das sowohl eine Ladungszustandssymmetrierung von intakten Batteriezellen als auch eine irreversible Überbrückung von hochohmig ausfallenden, zerstörten Zellen herstellen kann.

Diese Aufgabe wird durch die im Anspruch 1 gekennzeichneten Merkmale gelöst.

Die mit der Erfindung erzielbaren Vorteile bestehen insbesondere darin, daß das Überbrückungselement sowohl eine vollständige Aufladung aller Batteriezellen einer Hochtemperatur-Speicherbatterie als auch eine Überbrückung einer defekten Batteriezelle ermöglicht. Das Überbrückungselement stellt quasi ein Kombielement zur Symmetrierung und irreversiblen Überbrückung dar. Trotzdem ist das Überbrückungselement sehr einfach und platzsparend aufgebaut, ist kostengünstig herstellbar und besitzt eine auch hinsichtlich der hohen Dauerbetriebstemperatur von Hochtemperatur-Batterien erforderliche thermische Stabilität.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert.

Es zeigen:
- Fig. 1: Den Aufbau eines symmetrierenden Überbrückungselementes,
- Fig. 2: den Anschluß des symmetrierenden Überbrückungselementes an eine Batteriezelle,
- Fig. 3: eine Serienschaltung von drei Batteriezellen, zu denen drei symmetrierende Überbrückungselemente parallelgeschaltet sind,
- Fig. 4: den schematischen Aufbau einer Hochtemperatur-Speicherbatterie,
- Fig. 5: die Strom/Spannungs-Kennlinie des symmetrierenden Überbrückungselementes.

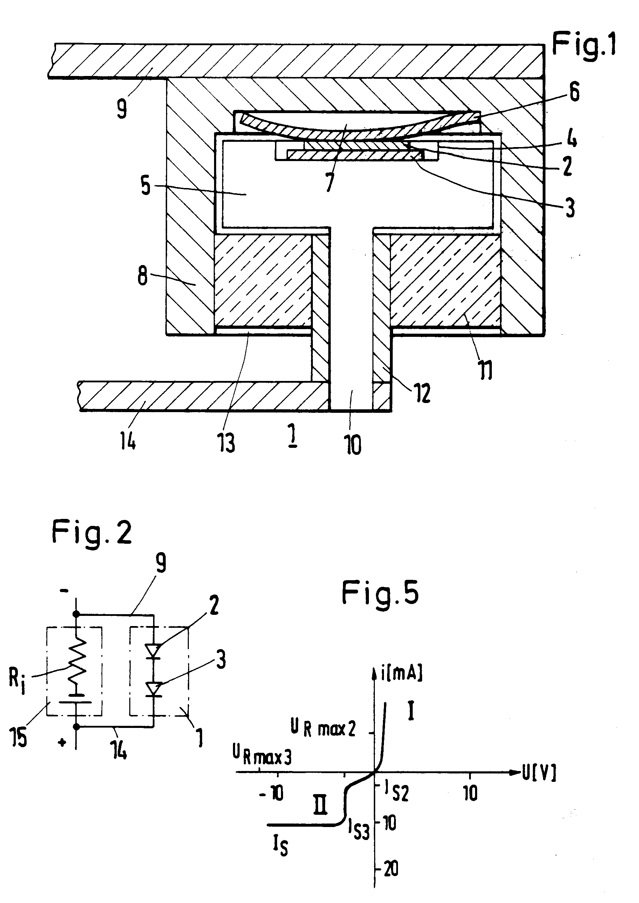

In Figur 1 ist der Aufbau eines symmetrierenden Überbrückungselementes 1 dargestellt. Das Überbrückungselement 1 weist zwei übereinanderliegende, scheibenförmige Halbleiterbauelemente 2 und 3 auf. Als Halbleiterbauelemente finden vorzugsweise Dioden Verwendung (es sind die Kathode des Bauelementes 2 und die Anode des Bauelementes 3 miteinander kontaktiert). Die beiden Halbleiterbauelemente 2,3 liegen in einer Ausnehmung 4 einer scheibenförmigen, metallischen Kontaktscheibe 5 (vorzugsweise aus Kupfer), und zwar ist die Unterseite des Halbleiterbauelementes 3 (= Kathode) mit der Kontaktscheibe 5 kontaktiert. Auf die Oberseite des Halbleiterbauelementes 2 (= Anode) drückt eine metallische Kontaktfeder 6 (Blattfeder). Die Kontaktfeder 6 stützt sich gegen eine Ausnehmung 7 eines metallischen Gehäuses 8 ab. Mit der Oberseite des Gehäuses ist ein stabförmiges negatives Anschlußelement 9 verbunden.

An die Kontaktscheibe 5 ist ein das Gehäuse überragender, stabförmiger Innenleiter 10 angeformt. Zwischen dem stabförmigen Innenleiter 10 und dem Gehäuse 8 befinden sich eine Glaseinschmelzung 11 sowie eine abdichtende Isolierhülle 12. Die Glaseinschmelzung 11 ist nach außen mit einer Isolierscheibe 13 abgeschlossen. Auf das Ende des stabförmigen Innenleiters 10 ist ein positives Anschlußelement 14 aufgesetzt.

In Figur 2 ist der Anschluß eines symmetrierenden Überbrückungselementes an eine Batteriezelle (elektrochemische Speicherzelle 15 einer Hochtemperatur-Speicherbatterie dargestellt. Das Überbrückungselement 1 ist über sein negatives Anschlußelement 9 mit dem negativen Pol und über sein positives Anschlußelement 14 mit dem positiven Pol der Batteriezelle 15 verbunden. Das Überbrückungselement 1 ist als Serienschaltung der zwei Halbleiterbauelemente 2,3 dargestellt, wobei Halbleiterdioden vorgesehen sind. Der innere Widerstand der Batteriezelle 15 ist mit Rᵢ bezeichnet. Die EMK der Batteriezelle 15 beträgt z.B. 2 Volt.

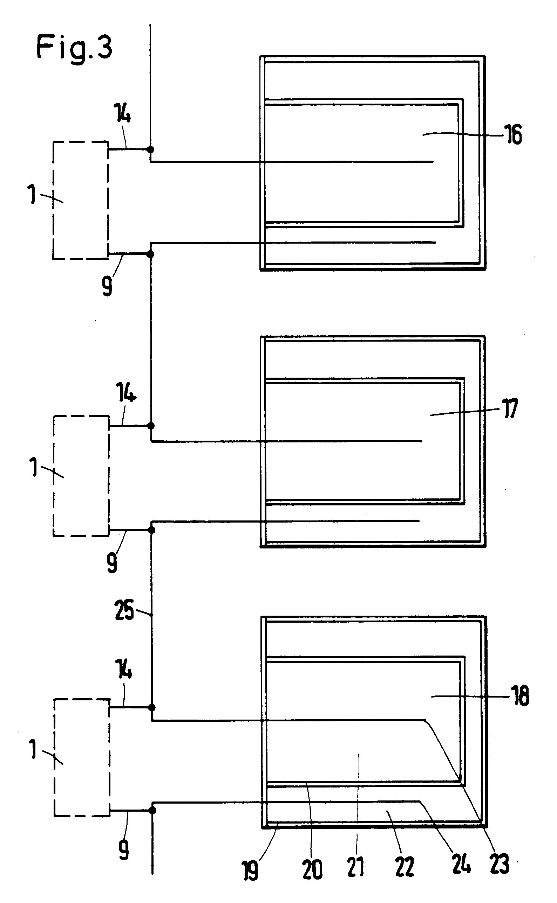

In Figur 3 ist eine Serienschaltung von drei Batteriezellen (elektrochemische Speicherzellen) gezeigt, zu denen drei symmetrierende Überbrückungselemente parallelgeschaltet sind. Die schematisch dargestellten Batteriezellen 16,17,18 gehören zu einer hier nicht dargestellten Hochtemperatur-Speicherbatterie. Jede der Batteriezellen 16,17,18 wird nach außen hin von einem metallischen Gehäuse 19 begrenzt, innerhalb dessen ein becherförmiger Festelektrolyt 20 angeordnet ist. Dieser ist aus Betaaluminiumoxid gefertigt und trennt die beiden Reaktandenräume 21 und 22 voneinander. Der Innenbereich des Festelektrolyten 20 dient als Anodenraum 21 und ist mit Natrium gefüllt, während zwischen dem metallischen Gehäuse 19 und dem Festelektrolyten 20 der Kathodenraum 22 vorgesehen ist, der Schwefel enthält. In den Reaktandenraum 21,22 ragt jeweils ein Stromkollektor 23 bzw. 24. Wie Figur 3 zeigt, steht der in den Festelektrolyten 20 der Batteriezelle 18 hineinragende Stromkollektor 23 über einen elektrischen Leiter 25 mit dem Stromkollektor 24 in Verbindung, der in den Kathodenraum 22 der benachbarten Batteriezelle 17 hineinragt. Gleichzeitig ist der Stromkollektor 23 mit dem positiven Anschlußelement 14 des Überbrückungselementes 1 verbunden, das zur Speicherzelle 19 parallel geschaltet ist. Der Stromkollektor 24 dieser Batteriezelle 18 steht elektrisch leitend mit dem negativen Anschlußelement 9 des Überbrückungselementes 1 in Verbindung. In entsprechender Weise sind die zu den übrigen Batteriezellen parallelgeschalteten Überbrückungselemente 1 mit diesen verschaltet.

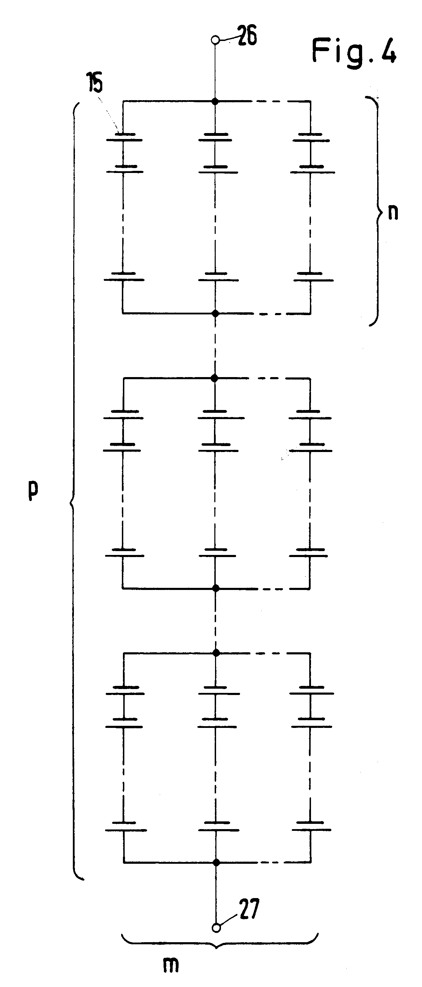

In Figur 4 ist der schematische Aufbau einer Hochtemperatur-Speicherbatterie dargestellt. Die Batterie ist aus p in Serie geschalteten Blöcken gebildet, wobei jeder Block m parallele Zweige aufweist, die jeweils aus n in Serie liegenden Batteriezellen bestehen. Die äußeren Anschlußpole der Batterie sind mit Ziffern 26,27 bezeichnet. Nach der Beschreibung des Aufbaues eines Überbrückungselementes, des Aufbau einer Hochtemperatur-Speicherbatterie und der Beschaltung einer Batteriezelle mit einem Überbrückungselement wird nachfolgend die Funktionsweise eines Überbrückungselementes erläutert. Hierzu wird auf Figur 5 verwiesen. In Figur 5 ist die Strom/Spannung/Kennlinie des symmetrierenden Überbrückungselementes dargestellt. Diese Kennlinie erhält man durch die Hintereinanderschaltung von zwei Dioden als Halbleiterbauelemente 1,2 mit jeweils unterschiedlicher Durchbruchspannung (Sperrspannung) und jeweils unterschiedlichem Leckstrom (Sperrstrom). Die Durchbruchspannung des ersten Halbleiterbauelementes 2 beträgt z.B. U_{Rmax} = - 3 Volt, der Leckstrom beträgt z.B. I_{S2} = - 3 Milliampere, die Durchbruchspannung des zweiten Halbleiterbauelementes 3 beträgt z.B.
U_{Rmax3} = - 12 Volt, der Leckstrom z.B.
I_{S3} = 10 Milliampere. Der Quadrant I der Figur 5 zeigt den bei defekter Batteriezelle 15 (z.B. hochohmig durch Bruch des Festelektrolyten) gültigen Kennlinienast und der Quadrant II zeigt den bei intakter Batteriezelle gültigen Kennlinienast.

Nachfolgend wird zuerst der Quadrant II der Kennlinie gemäß Figur 5 betrachtet, d.h. es wird insbesondere das Verhalten des Überbrückungslementes 1 bei potentiostatischer Überladung erläutert. Um die leeren Batteriezellen der Hochtemperatur-Speicherbatterie gemäß Figur 4 aufzuladen, wird an die äußeren Anschlußpole 26,27 der Batterie eine Stromquelle angeschlossen, die den Ladestrom liefert. Die Halbleiterbauelemente 2,3 der den Zellen parallelliegenden Überbrückungselemente befinden sich im Sperrzustand, so daß kein Strom über die Überbrückungselemente fließt. Hat die Spannung der Batteriezelle einen Wert von z.B. 2 Volt erreicht (= EMK der Batteriezelle), so sind sie auf ihre maximale Kapazität aufgeladen. Durch die Aufladung sind die Zellen hochohmig geworden, d.h. der durch sie fließende Strom wird wesentlich geringer. Da der durch die geladenen Zellen fließende Strom sehr klein ist, hat dies zur Folge, daß weitere mit den geladenen Zellen in Serie liegende, noch nicht vollständig auf ihre Maximalkapazität aufgeladene Zellen, nicht mehr weiter aufgeladen werden, d.h. bei einer Serienschaltung ohne überbrückende Hilfsmittel bestimmt die Zelle oder die Gruppe von Zellen mit der geringsten Kapazität die Gesamtkapazität aller Zellen der Batterie.

Eine vollständige Aufladung aller in Serie geschalteter Zellen oder Gruppen parallelgeschalteter Zellen wird durch die Parallelschaltung der Überbrückungselemente an die Batteriezellen ermöglicht. Die Durchbruchspannung des ersten Halbleiter-Bauelementes 2 entspricht exakt der maximalen Ladespannung einer Zelle oder der maximalen Ladespannung der Zellen einer Gruppe. Hat die Zelle bzw. haben die Zellen einer Gruppe bei der Aufladung eine Spannung von z.B.- 3 Volt erreicht (potentiostatische Überladung), so bricht das erste Halbleiterbauelement 2 (Sperrspannung U_{Rmax2} = - 3 Volt) zusammen und der Sperrstrom I_{S3} des zweiten Halbleiterbauelementes mit U_{Rmax3}= - 12 Volt bestimmt dann den zum Ladungsausgleich beitragenden Sperrstrom, d.h. der zur weiteren Aufladung von noch nicht ihre Maximalkapazität aufweisenden Zellen notwendige Strom fließt jetzt nicht mehr über die bereits vollständig geladene Batteriezelle, sondern nur noch über das parallele Überbrückungselement. Damit kann der Stromkreis der bereits aufgeladenen Zellen überbrückt werde, bis alle Zellen der Batterie auf ihre maximale Kapazität aufgeladen sind. Nach Abbau der Überspannung an der überladenen Zelle sinkt der Strom vom Wert des Sperrstromes I_{S3} wieder auf den sehr geringen Wert des Leckstromes I_{IS2} des ersten Halbleiterbauelementes 2 ab, d.h. das Überbrückungselement wird wieder stromfrei bzw. fast stromfrei.

Nachfolgend wird der Quadrant I der Kennlinie gemäß Figur 5 betrachtet, d.h. es wird das Verhalten des Überbrückungselementes beim hochohmigen Ausfall einer zerstörten Batteriezelle erläutert. Bei Natrium/Schwefel-Batteriezellen (siehe Figur 3) hat es sich gezeigt, daß ein derartiger Defekt meist dadurch auftritt, daß der Festelektrolyt Risse bekommt, so daß die Reaktionsstoffe Natrium und Schwefel direkt miteinander reagieren können. Die Batteriezelle gibt dann keine Spannung mehr ab und weist einen großen Innenwiderstand auf, der meist um mehr als einen Faktor 2 größer ist, als der ohmsche Widerstand einer intakten Batteriezelle. Die Folge hiervon ist, daß durch den Zweig mit der defekten Batteriezelle nur ein sehr geringer oder kein Lade- oder Entladestrom fließt. Ist der Widerstand der defekten Batteriezelle sehr groß, so fällt der Zweig, in dem die Batteriezelle angeordnet ist, vollständig für die Stromversorgung aus. Dies bedeutet, daß die Kapazität der gesamten Batterie unter diesen Bedingungen um ein Faktor (m - 1)/m kleiner ist als jene einer intakten Batterie (siehe hierzu auch Figur 4).

Wird eine z.B. durch den Bruch ihres Festelektrolyten zerstörte Batteriezelle hochohmig, so bedeutet dies, daß die Spannungen an ihren Stromkollektoren 23 und 24 umgepolt werden (Spannungsumkehr). Damit kommt es auch zu einer Umpolung der Spannung an den elektrischen Anschlußelementen 9 und 14 des jeweiligen Überbrückungselementes 1. Der Strom fließt jetzt nicht mehr durch die Batteriezelle, sondern wird von dem Überbrückungselement 1 übernommen. Die im Überbrückungselement 1 angeordneten Halbleiterbauelemente 2,3 (Dioden) sind so über ihre Anschlußpole mit den Anschlußelementen 9 und 14 verbunden, daß das Überbrückungselement jetzt in Durchlaßrichtung gepolt ist, d.h. es kann ein großer Strom durch es hindurchfließen. Durch diesen hohen Strom kommt es zu einer starken Temperaturerhöhung innerhalb der Halbleiterbauelemente 2,3, die zu einer Durchlegierung der in Flußrichtung betriebenen Halbleiterbauelemente führt, so daß ein dauerhaft großer Strompfad durch das Überbrückungselement 1 hindurch ausgebildet wird. Die metallische Kontaktscheibe 5 wird ebenfalls aufgeschmolzen, so daß ein optimaler elektrisch leitender Kontakt zwischen der Kontaktscheibe 5 und dem Halbleiterbauelement 2,3 gebildet wird. Auf diese Weise wird die defekte Batteriezelle irreversibel niederohmig kurzgeschlossen und behindert nicht die Auf- bzw Entladung der intakten Batteriezellen.

Die monolitische Integration der zwei seriell verschalteten Halbleiterbauelemente 2,3 (Dioden) in einem Chip ist möglich. Ein wesentlicher Vorteil des Kombielementes gegenüber einem reinen Überbrückungselement mit nur einem Halbleiterbauelement ist die Eigenschaft, daß Unsymmetrien durch die streuenden und temperaturabhängigen Sperrströme nur eines Halbleiterbauelementes (Halbleiterdiode) im Überbrückungselement ausgeglichen werden.

Als Halbleiterbauelemente 2,3, werden vorzugsweise Halbleiterdioden verwendet, wie bereits erwähnt. Es können jedoch auch Varistoren (variable resistor = Halbleiter, dessen Widerstand mit zunehmender Spannung abnimmt) und NTC-Widerstände (Negativ temperature-coeffizient-Widerstand = Halbleiterwiderstand, dessen Widerstand bei Erwärmung, z.B. infolge Stromdurchgang, abnimmt; Heißleiter) eingesetzt werden. Auch bei Einsatz von Varistoren oder NTC-Widerständen ist es wesentlich, daß jeweils zwei Halbleiterbauelemente mit unterschiedlicher Strom/Spannung-Charakteristik zusammengesetzt werden, um eine Kennlinie ähnlich der in Figur 5 dargestellten zu erzielen.

## Patentansprüche

1. Überbrückungselement zur Sicherung von in Serienschaltung zu einer Batterie zusammengeschalteten elektrochemischen Batteriezellen oder Gruppen von mehreren parallelgeschalteten Batteriezellen auf der Basis von Alkalimetall, Chalkogen und einem alkali-ionenleitenden Festelektrolyten, wobei jeder in Serie geschalteter Batteriezelle oder jeder Gruppe von Batteriezellen mindestens je ein Überbrückungselement parallelgeschaltet ist, das beim Erreichen einer vorgebbaren, maximalen Aufladekapazität der Batteriezellen deren Stromkreis überbrückt, dadurch gekennzeichnet,
- daß zwei in Abhängigkeit des Stromes oder der Spannung einen hochohmigen bzw. niederohmigen Zustand annehmenden Halbleiterbauelemente (2,3) mit jeweils unterschiedlicher Strom/Spannung-Charakteristik in Serie und in Sperrichtung geschaltet sind, wobei das erste Halbleiterbauelement (2) im hochohmigen Zustand einen geringeren Leckstrom (I_{S2}) aufweist, als das zweite Halbleiterbauelement (3;I_{S3}), das zweite Halbleiterbauelement (3) bei einer höheren Spannung
(U_{Rmax3}) bzw. einem höheren Strom vom hochohmigem in den niederohmigen Zustand übergeht als das erste Halbleiterbauelement (2,U_{Rmax2}) und das erste Halbleiterbauelement (2) exakt bei Erreichen der maximalen Ladespannung der Batteriezelle bzw. der Batteriezellengruppe vom hochohmigen in den niederohmigen Zustand wechselt,
- daß die Halbleiterbauelemente (2,3) zusammen mit einem schmelzbaren Bauteil (5) innerhalb eines Gehäuses (8) angeordnet sind, das aus einem elektrisch leitenden Material gefertigt und mit einem positiven und negativen elektrischen Anschlußelement (9,14) ausgerüstet ist, mit denen jeweils ein Anschlußpol eines Halbleiterbauelements (2,3) elektrisch leitend in Verbindung steht, während die weiteren beiden Anschlußpole der Halbleiterbauelemente (2,3) miteinander verbunden sind,
- daß der erste Anschlußpol des ersten Halbleiterbauelements (2) über ein elektrisch leitendes Kontaktelement (6) in Form einer Feder mit dem Gehäuse (8) und dem daran befestigten Anschlußelement (9) in elektrisch leitender Verbindung steht,
- und daß der zweite Anschlußpol des zweiten Halbleiterbauelementes (3) über einen stabförmigen Innenleiter (10) direkt oder zusätzlich über das schmelzbare Bauteil (5) an das positive Anschlußelement (14) elektrisch leitend angeschlossen ist.

2. Überbrückungselement nach Anspruch 1, gekennzeichnet durch den Einsatz von Halbleiterdioden als Halbleiterbauelemente.

3. Überbrückungselement nach Anspruch 1, gekennzeichnet durch den Einsatz von Varistoren als Halbleiterbauelemente.

4. Überbrückungselement nach Anspruch 1, gekennzeichnet durch den Einsatz von NTC-Widerständen als Halbleiterbauelemente.

5. Überbrückungselement nach einem der Ansprüche 1 bis 4, dadurch gekennzeichnet, daß das Gehäuse (8) durch eine temperaturbeständige Glaseinschmelzung (11) verschlossen ist.

6. Überbrückungselement nach einem der Ansprüche 1 bis 5, dadurch gekennzeichnet, daß die Halbleiterbauelemente (2,3) wenigstens bereichsweise in einer Ausnehmung (4) des schmelzbaren Bauteils (5) angeordnet sind.

7. Überbrückungselement nach Anspruch 2, gekennzeichnet durch eine monolithische Integration der zwei seriell verschalteten Dioden auf einem Halbleiterchip.

## Claims

1. Bypass element for safeguarding electrochemical battery cells connected together in series-connection to form a battery or groups of several parallel-connected battery cells based on alkali metal, chalcogen and an alkali ion-conducting solid electrolyte, at least one bypass element each being connected in parallel with each series-connected battery cell or each group of battery cells, which bypass element, when a predeterminable maximum charging capacity of the battery cells is reached, bypasses their circuit, characterised in that
- two semiconductor components (2, 3), which assume a high-impedance or low-impedance state in dependence on the current or on the voltage and in each case have a different current/voltage characteristic are connected in series or in reverse direction, in which arrangement the first semiconductor component (2) exhibits a lower leakage current (I_{S2}) in the high-impedance state than the second semiconductor component (3; I_{S3}), the second semiconductor component (3) goes from the high-impedance to the low-impedance state at a higher voltage (U_{Rmax3}) or a higher current than the first semiconductor component (2,U_{Rmax2}) and the first semiconductor component (2) changes from the high-impedance to the low-impedance state exactly when the maximum charging voltage of the battery cell or of the battery cell group is reached,
- in that the semiconductor components (2, 3), together with a fusible component (5), are arranged within a housing (8) which is manufactured of an electrically conductive material and is equipped with a positive and negative electrical connecting element (9, 14) to which in each case one connecting terminal of a semiconductor component (2, 3) is electrically conductively connected whilst the other two connecting terminals of the semiconductor components (2, 3) are connected to one another,
- in that the first connecting terminal of the first semiconductor component (2) is electrically conductively connected via an electrically conducting contact element (6) in the form of a spring to the housing (8) and the connecting element (9) attached thereto,
- in that the second connecting terminal of the second semiconductor component (3) is electrically conductively connected via a rod-shaped internal conductor (10) directly or additionally via the fusible component (5) to the positive connecting element (14).

2. Bypass element according to Claim 1, characterised by semiconductor diodes being used as semiconductor components.

3. Bypass element according to Claim 1, characterised by varistors being used as semiconductor components.

4. Bypass element according to Claim 1, characterised by NTC resistances being used as semiconductor components.

5. Bypass element according to one of Claims 1 to 4, characterised in that the housing (8) is closed by a temperature-resistant fused glass inclusion (11).

6. Bypass element according to one of Claims 1 to 5, characterised in that the semiconductor components (2, 3) are arranged at least area by area in a recess (4) of the fusible component (5).

7. Bypass element according to Claim 2, characterised by a monolithic integration of the two serially connected diodes on one semiconductor chip.

## Revendications

1. Elément de pontage destiné à la protection d'éléments de batterie électro-chimiques branchés en série pour former une batterie ou de groupes de plusieurs éléments de batterie, à base de métal alcalin, de chalcogène et d'un électrolyte solide conducteur d'ion alcalins branchés en parallèle, au moins un élément de pontage étant branché en parallèle avec chaque élément de batterie branché en série ou chaque groupe d'éléments de batterie, lequel élément de pontage shunte le circuit électrique des éléments dès qu'une capacité de charge maximale prédéterminable des éléments de batterie est atteinte, caractérisé
- par le fait que deux composants à semi-conducteurs (2, 3) avec des caractéristiques courant/tension différentes qui, en fonction du courant ou de la tension, prennent une forte ou une faible valeur ohmique, sont branchés en série, dans la direction de blocage, le premier composant à semi-conducteur (2) présentant à forte valeur ohmique un courant de fuite (I_{S2}) plus faible que le deuxième composant (3; I_{S3}), le deuxième composant à semi-conducteur (3) passant d'une forte valeur ohmique à une faible valeur ohmique en présence d'une tension (U_{Umax3}) ou d'un courant supérieur à celui du premier élément à semi-conducteur (2, U_{Rmax2}) et le premier élément à semi-conducteur (2, U_{Rmax2}) passant d'une forte valeur ohmique à une faible valeur ohmique au moment précis où la tension maximale de charge de l'élément de batterie ou du groupe d'éléments de batterie est atteinte,
- par le fait que les éléments à semi-conducteurs (2, 3) ainsi qu'un élément fusible (5) sont disposés dans un boîtier (8) réalisé en un matériau électriquement conducteur et pourvu d'organes de connexion (9, 14) électriquement positif et négatif auxquels sont reliés électriquement chaque fois un pôle d'un composant à semi-conducteur (2, 3), tandis que les deux autres pôles des composants (2, 3) sont connectés entre eux,
- par le fait que le premier pôle du premier composant à semi-conducteur (2) est relié électriquement au boîtier (8) et à l'élément de connexion (9) fixé sur celui-ci par l'intermédiaire d'un organe de contact (6) électriquement conducteur qui se présente sous la forme d'un ressort et
- par le fait que le deuxième pôle du deuxième composant (3) à semi-conducteur est connecté électriquement directement ou par l'intermédiaire de l'élément (5) fusible à l'élément de connexion (14) positif au moyen d'un conducteur interne (10) en forme de barre.

2. Elément de pontage selon la revendication 1, caractérisé par l'utilisation de diodes semi-conductrices comme composants à semi-conducteur.

3. Elément de pontage selon la revendication 1, caractérisé par l'utilisation de varistances semi-conductrices comme composants à semi-conducteur.

4. Elément de pontage selon la revendication 1, caractérisé par l'utilisation de de résistances NTC comme composants à semi-conducteur.

5. Elément de pontage selon l'une des revendications 1 à 4, caractérisé par le fait que le boîtier (8) est fermé par une masse de scellement de verte (11) résistant à la température.

6. Elément de pontage selon l'une des revendications 1 à 5, caractérisé par le fait que les composants à semi-conducteur (2, 3) sont disposés au partiellement dans une cavité (4) de l'élément fusible (5).

7. Elément de pontage selon la revendication 2, caractérisé par une intégration monolithique des deux diodes branchées en série sur un plaquette semi-conductrice.
